# EUROPEAN PATENT APPLICATION

(11) **EP 4 549 328 A2**
(43) Date of publication of application: **07.05.2025**
(21) Application number: 24207681.8
(22) Date of filing: 21.10.2024
(51) Int. Cl.: B65B 9/20, B65B 35/36, B65B 35/40, B65B 35/44, B65B 61/24, B65G 17/32, H01R 25/00, H01R 41/00, B65B 57/08

(54) **A DEVICE FOR PERFORMING OPERATIONS ON A PACKAGING MATERIAL FOR THE PRODUCTION OF PACKAGES CONTAINING A POURABLE PRODUCT AND RELATED METHOD**

(30) Priority: 02.11.2023 IT 202300023052
(71) Applicant: Tetra Laval Holdings & Finance S.A., 1009 Pully (CH)
(72) Inventor: CALTABIANO, Daniele, 41123 Modena (IT)
(74) Representative: Tetra Pak - Patent Attorneys SE

(57) **Abstract**

There is described a device (1) configured for performing operations on a packaging material for the production of packages (2) containing a pourable product, the device (1) comprises a looped chain conveyor (4) extending along a closed-loop path (P) and including a plurality of chain links (5) distributed along the closed-loop path (P) and joined to one another in succession, the chain conveyor (4) being actuatable in motion to cyclically convey the links (5) along the closed-loop path (P); at least one link (5) comprises at least one electrically-powerable tool (7) configured for performing said operations on the packaging material and a receiver (8) configured for receiving electrical energy and powering the tool (7); the device (1) further comprises a powering station (10) arranged at at least a portion (OP, RP) of the closed-loop path (P) and configured for transmitting electrical energy; the chain conveyor (4) is configured to move the link (5) through the powering station (10), whereby the receiver (8) receives electrical energy from the powering station (10) thereby powering the respective tool (7).

## Description

### TECHNICAL FIELD

The present invention relates to a device for performing operations on a packaging material for the production of packages containing a pourable product, preferably a pourable food product.

In particular, the present invention will refer, without however losing on generality, to a device for performing operations on packages containing a pourable product or on a tube of said packaging material for the production of said packages.

The present invention further relates to a method for performing operations on a packaging material for the production of packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging lines, which comprise packaging machines configured to form and fill the packages starting from a multilayer packaging material.

In particular, according to a non-limiting example of a packaging machine, a continuous tube is formed starting from a web of packaging material initially wound in a reel and fed through a plurality of unwinding rollers. The web of packaging material is sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding unit.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction.

In order to perform the forming and sealing operations, the known packaging machines comprise a forming and sealing unit configured to form the tube, so as to imprint an external shape to it corresponding to the desired shape of the package, and to seal the tube at equally spaced cross-sections orthogonal to the tube advancement direction.

Generally, a packaging machine of the above type comprises a pair of alternately movable forming and sealing jaws which are controllable with a reciprocating movement in the first direction and in a third direction orthogonal to the first direction and second direction to interact with the tube at successive portions thereof.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

Alongside the aforementioned packaging machines for filling, forming, sealing and folding the packages, the known packaging lines may comprise so-called "downstream equipments", which can include devices such as cap applicators, straw applicators, sampling units, grouping units, scanners/readers, sensor systems or the like.

As it is known, the use of linear motors is increasingly widespread for performing operations within the packaging line, both in the packaging machines and in the downstream equipments.

Such linear motors typically comprise an endless track, including electrically-powerable solenoids or coils, and a plurality of carts which are movably coupled to the track, which comprise each a permanent magnet, and which are movable along the track by means of electromagnetic interaction with the track.

Linear motors of the above type are used both for the forming and sealing unit and for the downstream equipments, such as in the cap applicators, straw applicators and so on.

Linear motors offer high flexibility of operation and therefore they are an extremely valid solution for performing the above-mentioned operations. However, linear motors are quite costly, given also the rather high fixed costs linked to the endless track.

Hence, the Applicant has observed the need to find a more cost-effective solution for performing the above-mentioned operations on the packaging material (i.e. on the tube and/or on the packages) without compromising on the flexibility thereof.

### DISCLOSURE OF INVENTION

It is therefore an object of the present invention to provide a device for performing operations on a packaging material for the production of packages containing a pourable product, which is designed to meet the above-mentioned need in a straightforward and low-cost manner.

This object is achieved by a device as claimed in claim 1. Preferred embodiments of the present invention are laid down in the appended dependent claims.

It is a further object of the present invention to provide a method for performing operations on a packaging material for the production of packages containing a pourable product, which allows to meet the above-mentioned need in a straightforward and low-cost manner.

This object is achieved by a method as claimed in claim 15.

### BRIEF DESCRIPTION OF THE DRAWINGS

Non-limiting embodiments of the present invention will be described by way of example with reference to the accompanying drawings, in which:
Figure 1 is a schematic top view, with parts removed for clarity, of part of a packaging line comprising a device for performing operation on a packaging material for the production of packages according to the present invention;
Figure 2 is a schematic top view, with parts removed for clarity, of the device of Figure 1 showing an operative condition thereof peculiar to the present invention;
Figure 3 is a larger-scale top view, with parts removed for clarity, of a chain link of the device of Figure 1;
Figure 4 is a perspective view, with parts removed for clarity, of the chain link of Figure 3;
Figure 5 is a schematic top view, with parts removed for clarity, of an alternative configuration of the packaging line of Figure 1; and
Figure 6 is a schematic top view, with parts removed for clarity, of a further alternative configuration of the packaging line of Figure 1.

### BEST MODE FOR CARRYING OUT THE INVENTION

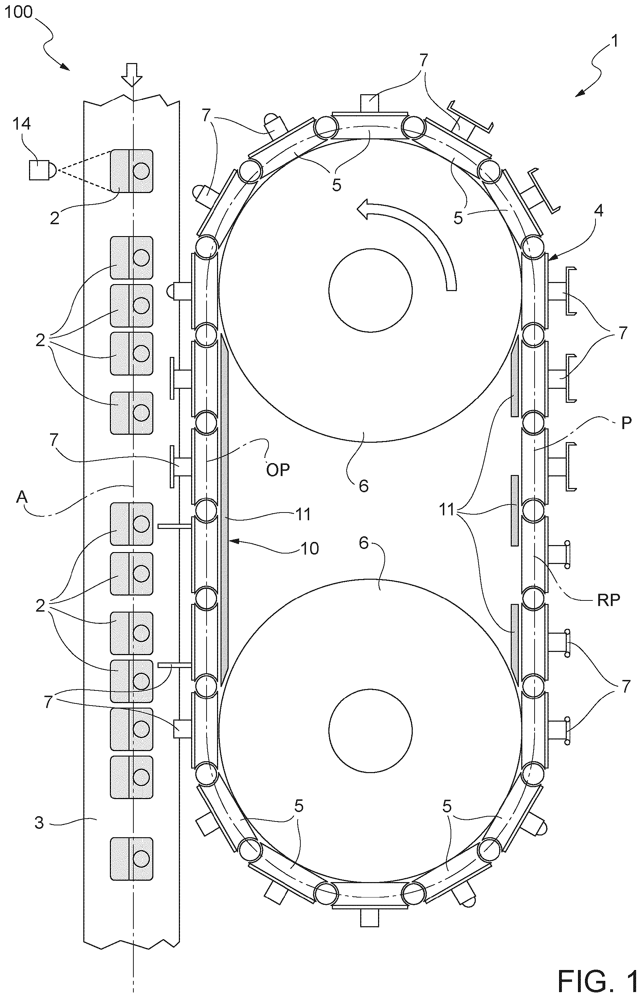

With reference to Figure 1, number 1 indicates as a whole a non-limiting example of a device configured for performing operations on a packaging material for the production of packages 2 containing a pourable product, preferably a pourable food product such as pasteurized or UHT milk, water, fruit juice, wine, peas, beans, etc.

Preferably, device 1 is part of a packaging line 100 comprising a packaging machine (not shown) configured for producing a plurality of packages 2 in a known manner.

As a non-limiting example, the packaging machine is configured for forming, sealing and folding packages 2 starting from a tube (not shown) of packaging material, in a manner known and not described in detail.

To this end, the packaging machine comprises:
- a filling device (not shown) for filling the tube with the pourable product;
- a forming and sealing device (not shown) for forming and sealing the tube, thereby obtaining a plurality of pillow packs, according to a manner known and not described in detail; and
- a folding device (not shown) for folding the pillow packs, thereby obtaining said packages 2, according to a manner known and not described in detail.

Hence, the packaging machine is configured to form and seal a plurality of pillow packs containing the pourable product starting from the tube and then to fold the pillow packs for obtaining the aforementioned formed, sealed and folded packages 2 containing the pourable product.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

Preferably, the present description will refer, without however losing on generality, to a device 1 configured to perform operation onto packages 2.

As a non-limiting example, packaging line 100 comprises a conveyor system 3, for example a belt conveyor, configured to advance a sequence of packages 2 along an advancing path A.

As depicted in Figure 1, device 1 defines a so-called "downstream equipment" as described in the foregoing introductory portion of the present description.

As per the type of operations to be performed by device 1, a better explanation will be given in the following.

Alternatively, device 1 may be part of the packaging machine and may define one of the aforementioned devices of the packaging machine.

More specifically, device 1 may be configured to perform operations onto said tube of packaging material. For example, device 1 may be defined by said forming and sealing device. In such a case, conveyor system 3 is configured to advance the tube.

In light of the above, with the expression "configured to perform operations on a packaging material" it is intended in the present description and in the appended claims that device 1 may be configured to perform operations on the packaging material in the various forms thereof (packages, tube).

As schematically shown in Figure 1, device 1 comprises a looped chain conveyor 4 extending along a closed-loop path P and including a plurality of chain links 5 distributed along path P and joined to one another in succession.

In detail, chain conveyor 4 is looped around two wheels 6, one of which is a driving wheel and the other is a driven wheel, preferably.

Thereby, chain conveyor 4 is actuatable in motion, by means of the driving wheel 6, to cyclically convey links 5 along path P.

For the sake of brevity, reference will be made in the following to a single link 5. The structural and functional features described in connection therewith are applicable to each link 5 of chain conveyor 4.

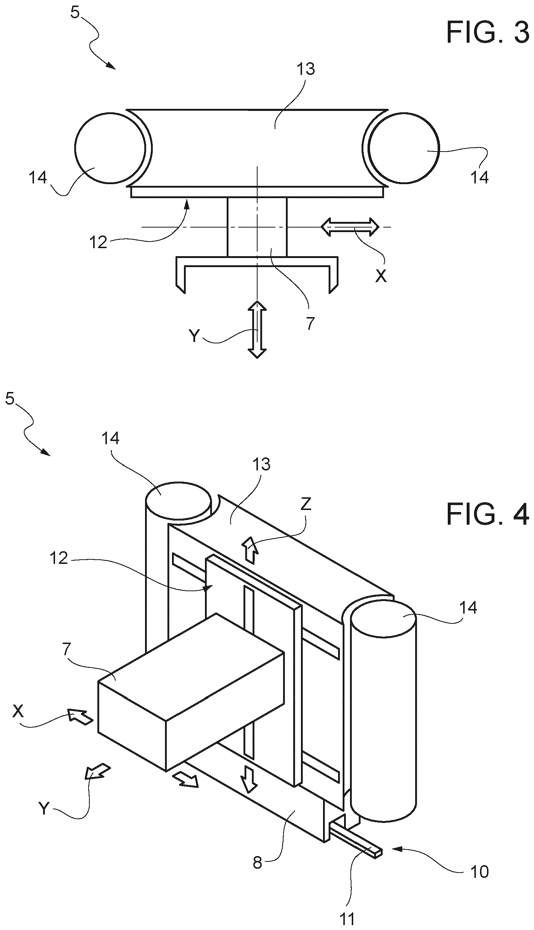

According to a first aspect of the present invention, link 5 comprises at least one electrically-powerable tool 7 configured for performing said operations on the packaging material (e.g. on packages 2 advanced by conveyor system 3 along path A) and a receiver 8 (shown in Figure 4) configured for receiving electrical energy and powering tool 7. A set of links 5 may comprise the tool 7, in alternative each link 5 may comprise a respective tool 7. The tools 7 of two different links 5 may be different.

According to a second aspect of the present invention, device 1 comprises a powering station 10 arranged at at least a portion of path P and configured for transmitting electrical energy.

According to a third aspect of the present invention, chain conveyor 4 is configured to move link 5 through powering station 10, whereby receiver 8 receives electrical energy from powering station 10 thereby powering the respective tool 7.

In particular, upon passage or transiting of link 5 through powering station 10, receiver 8 interacts with powering station 10 (which for example may comprise a suitable transmitter for transmitting the electrical energy), thereby receiving electrical energy with which receiver 8 powers tool 7. For example, the powering station 10 may generate an electromagnetic field which may induce a current in receiver 8.

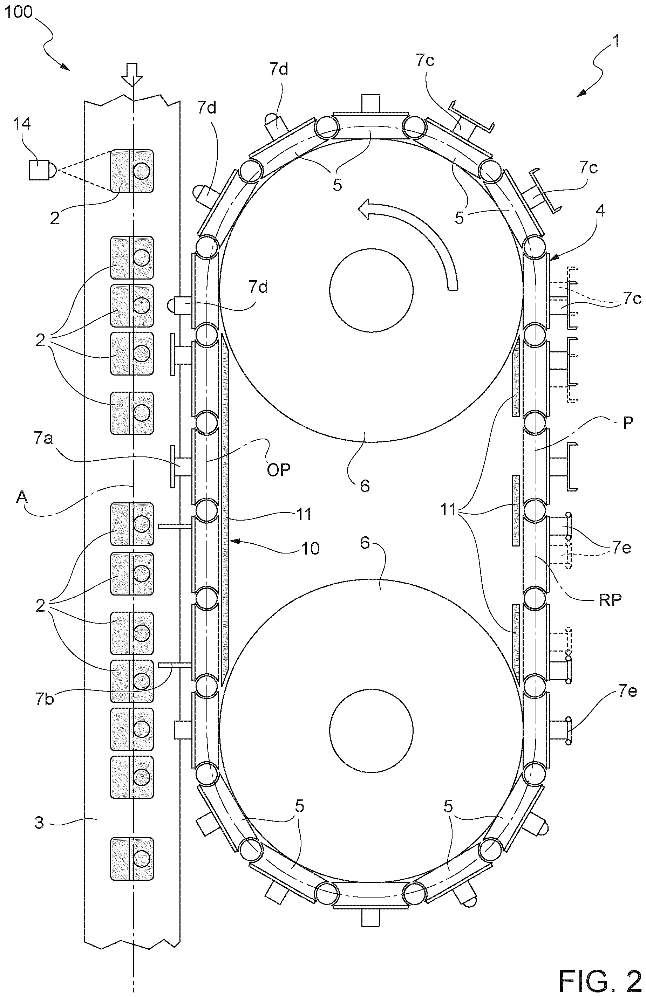

As schematically shown in Figures 1 and 2, powering station 10 comprises an energizing track 11 which extends along at least part of path P.

According to the invention, link 5 is configured to carry, by means of actuation of chain conveyor 4, the respective receiver 8 along energizing track 11 for interacting therewith and being thus energized with electrical energy.

In practice, powering station 10 is defined by energizing track 11.

In light of the above, the receiver 8 of the link 5 can gather electrical energy for powering an electrically-powerable tool 7 thereof in a relatively simple manner and without interfering with the electric powering of any other component of device 1 or packaging line 100.

Expediently, energizing track 11 extends only along the portions of path P where the powering of tools 7 is needed.

For example, chain conveyor 4 may comprise an operative section, corresponding to an operative branch OP of path P along which tools 7 are configured to perform said operations, and a return section corresponding to a return branch RP of path P.

In one embodiment, energizing track 11 extends along at least part of operative branch OP.

In one embodiment, energizing track 11 may extend also along part of return branch RP.

In one embodiment, energizing track 11 may be discontinued along operative branch OP and/or return branch RP.

In other words, powering station 10 preferably has a discontinuous configuration, comprising a discontinuous energizing track 11 which extends only at portions of path P.

It may be said that several powering stations 10 and thus energizing tracks 11 are present in device 1, or that energizing track 11 has several portions along path P.

In this way, there is provided a leaner layout and architecture, and less raw materials and components are used, thereby leading to decreased overall costs.

Advantageously, powering station 10 is configured for transmitting electrical energy to receiver 8 of the link 5 by means of wireless power transfer.

In detail, as schematized in Figure 4, there is a space between energizing track 11 and receiver 8, so that there is no physical contact between them.

In greater detail, energizing track 11 includes a first electric circuit, e.g. a primary coil, and receiver 8 includes a second electric circuit, e.g. a secondary coil. The transmission of electrical energy from the first electric circuit to the second electric circuit occurs by means of electrical induction, thereby defining the wireless transfer (i.e. the wireless electrical connection). For example, a current passing through the first electric circuit may generate an electromagnetic field configured to induce a current in the secondo electric circuit.

The above configuration allows for a substantial reduction of wear due to contactless interaction between these two parts.

Alternatively, energizing track 11 and receiver 8 may cooperate in sliding contact with one another, for example by means of electrically conductive brushes. In this case, the transfer of electrical energy may be more effective and with less dispersions, albeit entailing an increased wear with respect to the aforesaid wireless transfer.

According to an aspect of the present invention, at least one link 5 of the plurality of links 5 that define chain conveyor 4, comprises an actuator 12 (only schematically shown) for driving a movement of the respective tool 7 relatively to the link 5 itself and during the advancement of such link 5 along path P.

According to the invention, the receiver 8 of such link 5 is configured for powering actuator 12 with electrical energy received from powering station 10.

In practice, when such link 5 transits at powering station 10, its receiver 8 interacts with energized track 11, thereby gathering electrical energy and powering the respective actuator 12, which in turns drives the movement of the respective tool 7.

Actuator 12 may be an electric motor of the known type, configured to be actuated with electrical energy from powering station 10.

In the example shown, each link 5 comprises a frame 13 integrally coupled to the frames 13 of the following and preceding links 5, preferably by means of joints 14, and with respect to an advancement direction of chain conveyor 4 along path P.

Preferably, each joint 14 comprises a hinge.

Conveniently, actuator 12 is arranged at least in part within frame 13.

More specifically, a motor part (non-visible) of actuator 12 is embedded in frame 13 and connected with receiver 8, whereas a driving part of actuator 12 (visible in Figures 3 and 4) is arranged outside of frame 13 and is mechanically coupled to tool 7. Such driving part defines the movement of tool 7. Such driving part may include suitable gears and/or transmission means for mechanical coupling with tool 7.

Tool 7 of the at least one link 5 is movable with respect to the frame 13 of its respective link 5 and/or to the frames 13 of the following link 5 and of the preceding link 5.

In one embodiment, a set of links 5 comprise an actuator 12 of the aforementioned type, so that a plurality of tools 7 are movable relatively to the frames 13 of their link 5, respectively.

In one embodiment, all links 5 include an actuator 12 and a movable tool 7.

Conveniently, and with reference to Figures 3 and 4, actuator 12 is configured for driving:
- a movement of tool 7 relatively to the respective link 5 along a first direction X parallel to closed-loop path P; and/or
- a movement of tool 7 relatively to the respective link 5 along a second direction Y orthogonal to first direction X and closed-loop path P; and/or
- a movement of tool 7 relatively to the respective link 5 along a third direction Z orthogonal to first direction X and second direction Y; and/or
- a rotation of tool 7 about its own axis; and/or
- a composite motion of the above movements.

More precisely, first direction X is defined as being parallel to path P along its entire length; second direction Y is defined as being directed outwardly with respect to chain conveyor 4 and path P.

In light of the above, device 1 according to the present invention allows to obtain a "power on board" configuration.

Thanks to such configuration, a movement of tool 7 with respect to its link 5 and with respect to chain conveyor 4 can be obtained exploiting the "power on board" provided by the interaction between receivers 8 and powering station 10, thereby providing each tool 7 with certain degrees of freedom despite the use of a chain conveyor 4 and without the need for using a costly linear motor.

Moreover, the reliability of device 1 is increased, as well as its ease of maintenance (since chain links 5 are quite easier and cheaper to maintain than the independent carts or the track of a linear motor).

Hence, the link 5 according to the invention provides sufficient degrees of freedom to tool 7 by means of actuator 12 powered with energizing track 11, whereas when such degrees of freedom are not needed (e.g. in between the operative branches OP) energizing track 11 is absent.

Number of components and the overall costs associated with device 1 can therefore be maintained low.

Moreover, system 1 may acquire a highly increased flexibility in terms of positioning of the operative branch(es) OP, simply by arranging or displacing the various portions of energizing track 11 as desired.

Furthermore, wear is highly reduced, since mechanical contacts between cams and cam followers are reduced in number or are absent.

Also flexibility of system 1 in terms of format change is highly increased: it is in fact sufficient to appropriately control the extent of the aforesaid movements of each tool 7 (e.g. by means of a suitable control unit and within the stroke limits of actuator 12) to rapidly and easily adjust the position of tool 7 to different types of packages 2.

Conveyor system 3 may advance packages 2 along path A with a random spacing between them.

Accordingly, in one embodiment, each actuator 12 may be powered along return branch RP to drive a movement of the respective tool 7 along first direction X in order to adjust a positioning of such tool 7 with respect to the corresponding package 2 which the tool 7 has to perform operation on, as schematized in Figure 2.

To this end, device 1 may further comprise a detector 14 arranged facing conveyor system 3 at position upstream of device 1 (and in particular of the operative section of device 1) for detecting the positioning of each package 2 along path A, with respect to a nominal expected positioning thereof.

Each detection is then logically provided to the respective link 5, which actuator 12 will therefore adjust the position of tool 7 accordingly, thanks to the configuration according to the present invention.

In this regard, it is specified that powering station 10 is further configured to transmit to the receiver 8 logic information (i.e. control information or controls) through the electrical energy.

Accordingly, the link 5 is conveniently equipped with a control unit (of the known type) configured for receiving the logic information or control information from powering station 10, and to control actuator 12 accordingly.

In light of the above, the link 5 is configured to interact with a respective package 2 advanced along path A, so that the respective tool 7 carried by such link 5 performs the aforesaid operations thereon.

In one embodiment, at least one link 5, and preferably a set of links 5, comprise a pushing member 7a (schematized in Figures 1 and 2) configured to push/sort the respective package 2 out of path A (and in particular out of conveyor system 3).

In particular, the respective tool 7 comprises a pushing member 7a. More in particular, the respective tool 7 is defined by one pushing member 7a.

Accordingly, the receiver 8 of said at least one link 5 or set of links 5 is configured for powering the respective pushing member 7a with electrical energy received from powering station 10.

More specifically, the actuator 12 may be powered along operative branch OP to drive a movement of the respective tool 7 (i.e. pushing member 7a) along second direction Y in order to push/sort the respective package 2 out of path A and conveyor system 3.

Conveniently, actuator 12 may also drive a movement of pushing member 7a along first direction X to adjust a position of tool 7 to match a detected position of the respective package 2 detected by detector 14.

Expediently, the movement of each pushing member 7a along first direction X is based on position information gathered by detector 14.

In light of the above, in such a case said operations to be performed include pushing/sorting the packages 2.

In one embodiment, at least two links 5 comprise each a pushing member 7b, the pushing members 7b being configured to be moved towards one another, in particular along the first direction X, for pushing the respective packages 2 along path A and towards one another.

In particular, each tool 7 of the at least two links 5 comprises a pushing member 7b. More in particular, each respective tool 7 is defined by one pushing member 7b.

Accordingly, and the receiver 8 of said at least two links 5 is configured for powering the respective pushing member 7b with electrical energy received from powering station 10.

More specifically, each actuator 12 may be powered along operative branch OP to drive a movement of the respective tool 7 (i.e. pushing member 7b) along first direction X in order to push the respective package 2 along path A and towards the other package 2.

In light of the above, in such a case said operations to be performed include grouping at least two packages 2 together.

It is worth noticing that such two packages 2 may not be subsequent and therefore there may be other packages 2 interposed between those two along path A and on conveyor system 3.

This operation may be advantageous for subsequent palletizing of packages 2 or of boxes containing a group of packages 2.

Expediently, the movement of each pushing member 7b is based on position information gathered by detector 14, in the manner described above for pushing member 7a.

In one embodiment, tool 7 may comprise a gripper 7c (Figure 2), for example a gripper for gripping packages 2 or for retaining caps to be applied to packages 2 and for applying such caps on packages 2 advancing along path A. In other words, device 1 may define a cap applicator for applying caps onto packages 2.

Accordingly, actuator 12 may be powered along return branch RP to drive a movement of the respective gripper 7c, so that such gripper 7c is in an adjusted position once traveling along operative branch OP. This is schematized in Figure 2.

Expediently, the movement of each gripper 7c is based on position information gathered by detector 14.

In one embodiment, gripper 7c may be controllable in an open configuration and in a closed configuration.

Advantageously, actuator 12 may be configured for controlling gripper 7c between the open configuration and the closed configuration.

In this way, powering station 10 may also provide the control and driving necessary for actively gripping and releasing caps or packages 2, thereby avoiding the need for further dedicated cam systems or complicated lever mechanisms.

From the foregoing, it is thus clear that the "power on board" configuration of the device 1 according to the invention allows for an easy, simple and rather flexible powering and control of various electrically-powerable tools 7.

In this regard, at least one link 5, and preferably a set of links 5, comprise a sensor 7d (Figure 2) configured to detect a physical quantity correlated to the packaging material (and in particular to the respective package 2) and/or to the link 5 itself. For example, the sensor 7d may comprise an inertial sensor, such as an accelerometer and/or a gyroscope.

In particular, the tool 7 of such at least one link 5 or set of links 5 comprises the sensor 7d, so that said operations to be performed include a detection of said physical quantity by means of the sensor 7d.

According to the invention, the receiver 8 of said at least one link 5 or set of links 5 is configured for powering sensor 7d with electrical energy received from powering station 10.

Conveniently, in such a case receiver 8 is configured to receive electrical energy from powering station 10 along operative branch OP, i.e. when the respective link(s) 5 face(s) the packages 2 or the packaging material advanced by conveyor system 3.

As an example, sensor 7d may be configured to detect one or more of the following:
- a position of package 2 along path A;
- a presence of package 2 along path A;
- a weight of package 2;
- an orientation of package 2;
- an acceleration of package 2;
- a speed of package 2.

According to the invention, actuator 12 may be powered along return branch RP to drive a movement of the respective sensor 7d, so that such sensor 7d is in an adjusted position once traveling along operative branch OP. This is schematized in Figure 2.

Expediently, the movement of each sensor 7d is based on position information gathered by detector 14.

In this way, each sensor 7d can be correctly positioned with respect to the relative package 2.

Thanks to the above configuration, a simple and effective electric powering of a sensor 7d on one or more links 5 may be obtained, without the need for complicated electrical energy transmission system, which would be incompatible with chain conveyor 4 (such as cables or other complicated and/or cumbersome means).

Furthermore, an adjustment of the positioning of sensors 7d can be obtained albeit using a chain conveyor 4 and without the need for a linear motor.

In one embodiment, at least one link 5, and preferably a set of links 5, comprise a reader 7e (Figure 2) configured to read information coded on the packaging material (and in particular on a respective package 2), in particular in form of a QR-code, a bar code, or an RFID tag.

In particular, the tool 7 of such at least one link 5 or set of links 5 comprises the reader 7e, so that said operations to be performed include a reading of said information by means of the reader 7e.

According to the invention, the receiver 8 of said at least one link 5 or set of links 5 is configured for powering reader 7e with electrical energy received from powering station 10.

Conveniently, in such a case receiver 8 is configured to receive electrical energy from powering station 10 along operative branch OP, i.e. when the respective link(s) 5 face(s) the packages 2 or the packaging material advanced by conveyor system 3.

As an example, reader 7e may be configured to read a type of package 2 or of packaging material, a type of pourable product within the package 2, a capacity of the package 2, or the like.

According to the invention, actuator 12 may be powered along return branch RP to drive a movement of the respective reader 7e, so that such reader 7e is in an adjusted position once traveling along operative branch OP. This is schematized in Figure 2.

Expediently, the movement of each reader 7e is based on position information gathered by detector 14.

In this way, each reader 7e can be correctly positioned with respect to the relative package 2.

Thanks to the above configuration, a simple and effective electric powering of a reader 7e on one or more links 5 may be obtained, without the need for complicated electrical energy transmission system, which would be incompatible with chain conveyor 4 (such as cables or other complicated and/or cumbersome means).

Furthermore, an adjustment of the positioning of readers 7e can be obtained albeit using a chain conveyor 4 and without the need for a linear motor.

Conveniently, device 1 may include a control unit which is configured to logically communicate (i.e. to electronically exchange information) with the aforementioned control units of the links 5.

Hence, a wireless communication between such control units can be easily established, by means of which the control unit of device 1 can remotely control the actuation of tool 7.

Advantageously, the link 5 includes an electrical energy storage member (not shown), such as a battery, electrically connected with receiver 8 and with tool 7 (in particular via the actuator 12) and configured to store electrical energy supplied from receiver 8, in particular for a predetermined amount of time, and to supply the stored electrical energy to tool 7.

Only one powering station 10 may be present, for example at operative branch OP or at return branch RP, since the storage member may provide sufficient electrical energy to tool 7 (actuator 12) to perform said operation.

In other words, tool 7 may be cyclically powered only once by interaction of receiver 8 with the single powering station 10. As a result, an even more reduced wear and an even more simplified architecture may be obtained.

Device 1 according to the present invention provides for a very flexible means for performing operation on the packaging material (tube, packages 2 or even pillow packs), in a simple manner and very adaptable to various needs.

Accordingly, the preferred and non-limiting configurations of packaging line 100 illustrated hereinafter are made possible by the adaptability, versatility and flexibility of device 1 according to the invention.

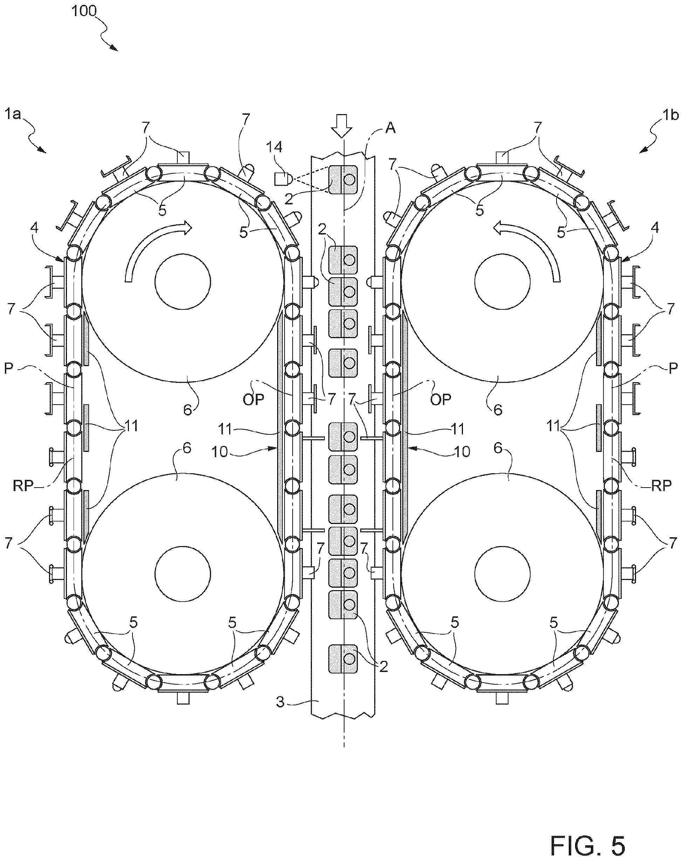

Figure 5 schematically illustrates an alternative configuration of packaging line 100.

In such a configuration, packaging line 100 comprises two devices 1a, 1b of the type described above.

Advantageously, the devices 1a, 1b are arranged on opposite lateral sides of conveyor system 3, so that each respective operative section, and therefore each respective operative branch OP extends parallel to advancing path A.

In this way, multiple operations can be performed on the packaging material or on a sequence of packages 2 at the same time.

For example, the two devices 1a, 1b may be part of the aforementioned forming and sealing unit, whereby tools 7 are forming members and/or sealing members, configured for forming a tube of packaging material. In such a case, the two devices 1a, 1b are arranged at opposite lateral sides of the tube.

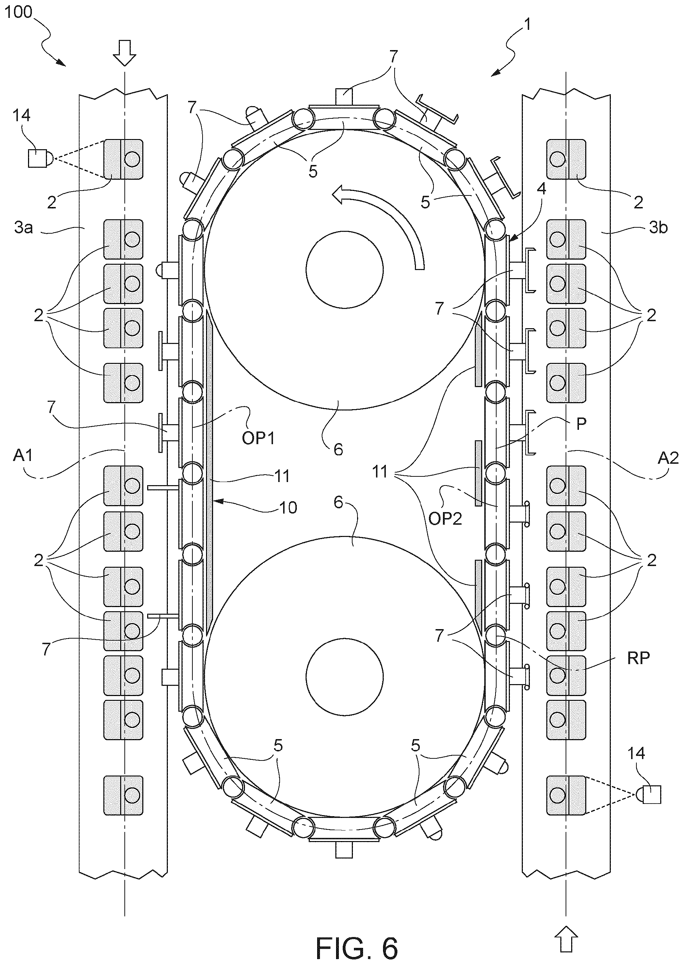

Figure 6 schematically illustrates an alternative configuration of packaging line 100.

In such a configuration, packaging line 100 comprises two conveyor systems 3a, 3b, each configured for advancing one respective tube of packaging material or one respective sequence of packages 2 along a respective advancing path A1, A2.

Packaging line 100 includes a single device 1. The chain conveyor 4 of such single device 1 has two operative sections corresponding to two operative branches OP1, OP2 of path P along which the tools 7 are configured to perform said operations.

Accordingly, each conveyor system 3a, 3b is arranged adjacent to one respective operative section so that each advancing path A1, A2 extends parallel to one respective operative branch OP1, OP2.

In this way, a single device 1 may operate on several sequence of packages 2 or on several tubes of packaging material at the same time, thereby leading to high savings in terms of space and costs.

From the foregoing description, it is clear how the device 1 according to the invention allows to implement a method for performing operations on a packaging material for the production of packages 2 containing a pourable product, the method comprising the steps of:
- advancing a packaging material or a plurality of packages 2 made of packaging material along an advancing path A;
- actuating in motion a chain conveyor 4 extending along a closed-loop path P and including a plurality of chain links 5 joined to one another in succession, at least one link 5 comprising at least one electrically-powerable tool 7 configured for performing said operations and a receiver 8 configured for receiving electrical energy and powering the tool 7;
- conveying the links 5 along the closed-loop path P and through a powering station 10 by actuating the chain conveyor 4;
- transmitting electrical energy to the receiver 8 by means of the powering station 10 and upon transiting of the respective link 5 through the powering station 10;
- powering the tool 7 with the electrical energy received from the powering station 10.

The advantages of cap applicator system 1 according to the present invention will be clear from the foregoing description.

In particular, a relatively simple, reliable, flexible, safe device 1 for performing operations on a packaging material and which is more cost-effective than the solutions entailing linear motors is obtained.

More in particular, movable tools 7 with respect to its link 5 and with respect to chain conveyor 4 can be easily obtained exploiting the "power on board" provided by the interaction between receivers 8 and powering station 10, thereby providing the tool 7 with certain degrees of freedom despite the use of a chain conveyor 4 and without the need for using a costly linear motor.

Moreover, the reliability of device 1 is increased, as well as its ease of maintenance, since chain links 5 are quite easier and cheaper to maintain than the independent carts or the track of a linear motor.

Hence, the link 5 according to the invention provides sufficient degrees of freedom to tool 7 by means of actuator 12 powered with energizing track 11, whereas when such degrees of freedom are not needed (e.g. in between the operative branches OP) energizing track 11 is absent.

Number of components and the overall costs associated with device 1 can therefore be maintained low.

Moreover, system 1 may acquire a highly increased flexibility in terms of positioning of the operative branch(es) OP, simply by arranging or displacing the various portions of energizing track 11 as desired.

Furthermore, wear is highly reduced thanks to the fact that receivers 8 and energizing tracks 11 preferably interact with one another with little or no contact (by wireless power transfer).

In addition, flexibility of system 1 in terms of format change is highly increased: it is in fact sufficient to appropriately control the extent of the aforesaid movements of each tool 7 (e.g. by means of a suitable control unit and within the stroke limits of actuator 12) to rapidly and easily adjust the position of tool 7 to different types of packages 2.

Furthermore, tools 7 like a sensor 7d or a reader 7e may be implemented on some links 5 and very easily powered by the "power on board" configuration of the device 1 according to the invention.

Clearly, changes may be made to the device 1 as described herein without, however, departing from the scope of protection as defined in the accompanying claims.

## Claims

1. A device (1) configured for performing operations on a packaging material for the production of packages (2) containing a pourable product, the device (1) comprising a looped chain conveyor (4) extending along a closed-loop path (P) and including a plurality of chain links (5) distributed along the closed-loop path (P) and joined to one another in succession, the chain conveyor (4) being actuatable in motion to cyclically convey the links (5) along the closed-loop path (P);
wherein at least one link (5) comprises at least one electrically-powerable tool (7) configured for performing said operations on the packaging material and a receiver (8) configured for receiving electrical energy and powering the tool (7);
wherein the device (1) further comprises a powering station (10) arranged at at least a portion (OP, RP) of the closed-loop path (P) and configured for transmitting electrical energy;
and wherein the chain conveyor (4) is configured to move the at least one link (5) through the powering station (10), whereby the receiver (8) receives electrical energy from the powering station (10) thereby powering the respective tool (7).

2. Device (1) as claimed in claim 1, wherein the powering station (10) is configured for transmitting electrical energy to the receiver (8) of the link (5) by means of wireless power transfer.

3. Device (1) as claimed in claim 1 or 2, wherein the powering station (10) comprises an energizing track (11) extending along at least said portion (OP, RP) of the closed-loop path (P),
and wherein the link (5) is configured to carry, by means of actuation of the chain conveyor (4), the respective receiver (8) along the energizing track (11) for interacting therewith and being thus energized with electrical energy.

4. Device (1) as claimed in any one of the previous claims, wherein the at least one link (5) comprises an actuator (12) for driving a movement of the respective tool (7) relatively to the link (5) itself during the advancement of such link (5) along the closed-loop path (P);
and wherein the receiver (8) of said at least one link (5) is configured for powering the actuator (12) with electrical energy received from the powering station (10).

5. Device (1) as claimed in claim 4, wherein the link (5) comprises a frame (13) integrally coupled to the frames (13) of the following link (5) and of the preceding link (5), with respect to an advancement direction of the chain conveyor (4) along the closed-loop path (P);
said tool (7) being movable with respect to the frame (13) of its respective link (5) and/or to the frames (13) of the following link (5) and of the preceding link (5).

6. Device (1) as claimed in claim 4 or 5, wherein the actuator (13) is configured for driving:
- a movement of the tool (7) relatively to the respective link (5) along a first direction (X) parallel to the closed-loop path (P); and/or
- a movement of the tool (7) relatively to the respective link (5) along a second direction (Y) orthogonal to the first direction (X) and to the closed-loop path (P); and/or
- a movement of the tool (7) relatively to the respective link (5) along a third direction (Z) orthogonal to the first direction (X) and to the second direction (Y); and/or
- a rotation of the tool (7) about its own axis; and/or
- a composite motion of the above movements.

7. Device (1) as claimed in any of the previous claims, wherein at least one link (5) comprises a sensor (7d) configured to detect a physical quantity correlated to the packaging material and/or to the link (5);
wherein the tool (7) of said at least one link (5) comprises said sensor (7d), so that said operations to be performed include a detection of said physical quantity by means of the sensor (7d);
and wherein the receiver (8) of said at least one link (5) is configured for powering the sensor (7d) with electrical energy received from the powering station (10).

8. Device (1) as claimed in any of the previous claims, wherein at least one link (5) comprises a reader (7e) configured to read information coded on the packaging material, in particular in form of a QR-code, a bar code, or an RFID tag;
wherein the tool (7) of said at least one link (5) comprises said reader (7e), so that said operations to be performed include a reading of said information by means of the reader (7e);
and wherein the receiver (8) of said at least one link (5) is configured for powering the reader (7e) with electrical energy received from the powering station (10).

9. Device (1) as claimed in any one of the previous claims, wherein the tools (7) are configured for performing said operations on packages (2) made from said packaging material and containing a pourable product;
wherein each link (5) is configured to interact with a respective package (2) advanced along an advancing path (A);
wherein at least one link (5) comprises a pushing member (7a) configured to push/sort the respective package (2) out of the advancing path (A), the tool (7) of said at least one link (5) comprising said pushing member (7a), so that said operations to be performed include pushing/sorting the packages (2);
and wherein the receiver (8) of said at least one link (5) is configured for powering the pushing member (7a) with electrical energy received from the powering station (10).

10. Device (1) as claimed in any one of the claims 1 to 8, wherein the tools (7) are configured for performing said operations on packages (2) made from said packaging material and containing a pourable product;
wherein each link (5) is configured to interact with a respective package (2) advanced along an advancing path (A);
wherein at least two links (5) comprise each a pushing member (7b), the pushing members (7b) being configured to be moved towards one another for pushing the respective packages (2) along the advancing path (A) and towards one another, the tools (7) of said at least two links (5) comprising each said pushing member (7b), so that said operations to be performed include grouping at least two packages (2) together;
and wherein the receiver (8) of said at least two links (5) is configured for powering the respective pushing member (7b) with electrical energy received from the powering station (10).

11. Device (1) as claimed in any one of the previous claims, wherein the at least one link (5) includes an electrical energy storage member electrically connected with the receiver (8) and with the tool (7) and configured to store electrical energy supplied from the receiver (8) and to supply the stored electrical energy to the tool (7).

12. Packaging line (100) configured for producing packages (2) starting from a tube of packaging material, the packaging line (100) comprising:
- a device (1) for performing operations on the packaging material as claimed in any one of the previous claims;
- a conveyor system (3) for advancing the tube of packaging material or a sequence of packages (2).

13. Packaging line as claimed in claim 12, wherein the conveyor system (3) is configured to advance said tube of packaging material or said sequence of packages (2) along an advancing path (A);
wherein the packaging line (100) comprises at least two said devices (1a, 1b), the chain conveyor (4) of each device (1a, 1b) having an operative section, corresponding to an operative branch (OP) of the closed-loop path (P) along which the tools (7) are configured to perform said operations, and a return section, corresponding to a return branch (RP) of the closed-loop path (P);
and wherein the devices (1a, 1b) are arranged on opposite lateral sides of the conveyor system (3) so that each operative section extends parallel to the advancing path (A).

14. Packaging line (100) as claimed in claim 12, and comprising two said conveyor systems (3a, 3b), each configured for advancing one respective tube of packaging material or one respective sequence of packages (2) along a respective advancing path (A1, A2);
wherein the chain conveyor (4) has at least two operative sections corresponding to respective operative branches (OP1, OP2) of the closed-loop path (P) along which the tools (7) are configured to perform said operations;
and wherein each conveyor system (3a, 3b) is arranged adjacent to one respective operative section so that each advancing path (A1, A2) extends parallel to one respective operative branch (OP1, OP2).

15. Method for performing operations on a packaging material for the production of packages (2) containing a pourable product, the method comprising the steps of:
- advancing a packaging material or a plurality of packages (2) made of packaging material along an advancing path (A);
- actuating in motion a chain conveyor (4) extending along a closed-loop path (P) and including a plurality of chain links (5) joined to one another in succession, at least one link (5) comprising at least one electrically-powerable tool (7) configured for performing said operations and a receiver (8) configured for receiving electrical energy and powering the tool (7);
- conveying the links (5) along the closed-loop path (P) and through a powering station (10) by actuating the chain conveyor (4);
- transmitting electrical energy to the receiver (8) by means of the powering station (10) and upon transiting of the respective link (5) through the powering station (10);
- powering the tool (7) with the electrical energy received from the powering station (10).
